# NEUE EUROPÄISCHE PATENTSCHRIFT

(11) **EP 1 409 312 B2**
(45) Veröffentlichungstag und Bekanntmachung des Hinweises auf die Entscheidung über den Einspruch: **14.08.2013**
(45) Hinweis auf die Patenterteilung: 24.02.2010
(21) Anmeldenummer: 02754352.9
(22) Anmeldetag: 11.07.2002
(51) Int. Cl.: B60T 7/22

(54) **VERFAHREN UND VORRICHTUNG ZUR AUTOMATISCHEN STEUERUNG DER VERZÖGERUNGSEINRICHTUNG EINES FAHRZEUGS**
METHOD AND DEVICE FOR AUTOMATICALLY CONTROLLING THE DECELERATION DEVICE OF A VEHICLE
PROCEDE ET DISPOSITIF DE COMMANDE AUTOMATIQUE DU SYSTEME DE DECELERATION D'UN VEHICULE

(30) Priorität: 11.07.2001 DE 10133030
(43) Veröffentlichungstag der Anmeldung: 21.04.2004
(73) Patentinhaber: ROBERT BOSCH GMBH, 70442 Stuttgart (DE)
(72) Erfinder: KNOOP, Michael, 71638 Ludwigsburg (DE); BRAEUCHLE, Goetz, 74934 Reichertshausen (DE); WINNER, Hermann, 76467 Bietigheim (DE); WEILKES, Michael, 74343 Sachsenheim (DE); HEINEBRODT, Martin, 70176 Stuttgart (DE); UHLER, Werner, 76646 Bruchsal (DE); HERMSEN, Wolfgang, 61267 Neu Anspach (DE); THIELE, Joachim, 70732 Tamm (DE); STAEMPFLE, Martin, 89075 Ulm (DE); OECHSLE, Fred, 71642 Ludwigsburg (DE); WILHELM, Ulf, 71277 Rutesheim (DE)
(86) Internationale Anmeldenummer: PCT/DE2002/002545
(87) Internationale Veröffentlichungsnummer: WO 2003/006290

(56) Entgegenhaltungen:
- EP-A- 0 967 121
- EP-A- 1 081 004
- DE-A1- 3 830 790
- DE-A1- 19 633 736
- DE-A1- 19 735 687
- DE-A1- 19 738 611
- DE-A1- 19 739 385
- DE-A1- 19 944 556
- US-A- 5 670 953

## Beschreibung

Vorgeschlagen wird ein Verfahren und eine Vorrichtung zur Steuerung von Verzögerungseinrichtungen eines Fahrzeugs während einer Bremsoperation, insbesondere eines Fahrzeugs, das mit einem Sensor zur adaptiven Geschwindigkeitsregelung ausgerüstet ist. Während der Bremsoperation werden auf Grundlage fahrdynamischer Modelle, die durch Signale der Umfeldsensorik individualisiert werden, sowie des charakteristischen, zu erwartenden Fahrerverhaltens, das durch Auswertung der seitherigen Fahrerreaktionen gewonnen wurde, Gefährdungsmaße ermittelt. Ein erstes Gefährdungsmaß wird für den Fall einer fortgeführten Verzögerung und ein zweites Gefährdungsmaß für den Fall einer ungebremsten Weiterbewegung des Fahrzeugs vorrausberechnet. Durch den Vergleich der beiden Gefährdungsmaße wird entschieden, ob die automatische Fahrzeugverzögerung beibehalten werden soll oder ob die Bremsung vor Erreichen des Stillstandes des Fahrzeugs aufgehoben werden soll.

### Stand der Technik

Bekannt sind Tempomaten, die mittels eines Abstandssensors die eingestellte Geschwindigkeit absenken, wenn vor dem eigenen Fahrzeug ein vorrausfahrendes, langsameres Fahrzeug erkannt wurde. Derartige Systeme sind unter dem Namen "adaptive cruise control" (ACC) verbreitet. Ein derartiges System wird in dem Aufsatz "adaptive cruise control system aspects and development trends" von Winner et al. (SAE-paper 96 1010, International Congress and Exposition, Detroit, 26.-29. Februar 1996) beschrieben. Derartige Systeme sind bislang als Komfortsysteme geplant, weshalb die maximale Verzögerungsleistung dieser Systeme nicht ausreicht, um drohende Kollisionen mit vorausfahrenden Fahrzeugen zu verzögern.

Das Dokument DE 197 50 913 beschreibt ein automatisches Bremsregelsystem für Kraftfahrzeuge, das in der Lage ist, Hindernisse zu erfassen und bei einer drohenden Kollision das eigene Fahrzeug bis in den Stillstand abzubremsen. Dies geschieht mittels einer Hinderniserfassungseinrichtung zum Erfassen eines Hindernisses vor dem Fahrzeug, einer Stoppentscheidungseinrichtung zum Entscheiden, ob das Fahrzeug im Wesentlichen gestoppt wurde, einer Bremskraftbestimmungseinrichtung zum Bestimmen einer Bremskraft um das Fahrzeug gestoppt zu halten, einer Bremskraftregeleinrichtung, einer Fahrwiederaufnahmeentscheidungseinrichtung sowie einer Freigabeeinrichtung zum Freigeben der Bremskraft. Dieses System zeichnet sich dadurch aus, dass ein Fahrzeug automatisch bis in den Stillstand abgebremst werden kann. Ein Abbruch der Verzögerung während des Bremseingriffes wird jedoch weder in dieser Schrift noch in einer anderen bekannten Schrift erwähnt.

Aus der EP-A-0 967 121 ist ein Verfahren und eine Steuereinrichtung zur Minimierung von Unfallfolgen bei Fahrzeugen bekannt, wobei in einer Auswerteeinrichtung die von Umgebungssensoren gelieferten Umgebungsdaten und von der Fahrzeugelektronik gelieferten Fahrzeugdaten unter Berücksichtigung von in einem Speicher abgelegten charakteristischen Merkmalen laufend ausgewertet werden. Anhand dieser Auswertung kann festgestellt werden, ob eine unvermeidliche Unfallsituation bezüglich eines erkannten Hindernisses vorliegt, worauf dann die Auswerteeinrichtung über eine Bremsensteuerung ein gezieltes Abbremsen der einzelnen Räder des Fahrzeugs und/oder einen automatischen Lenkvorgang vornimmt. Dabei erfolgt der Bremsvorgang so, daß einerseits eine optimale Geschwindigkeitsreduzierung und auch ein günstiger Aufprallwinkel erreicht wird. Ein optimaler Aufprall-Sollwinkel hängt von fahrzeugspezifischen Merkmalen und von der jeweiligen Unfallsituation ab.

Die Offenlegungsschrift DE 19944556 A1 offenbart ein Verfahren zur Steuerung einer Bremsanlage, bei welcher in wenigstens einer Betriebssituation Bremskraft an wenigstens einem Rad unabhängig vom Fahrer erhöht wird, wobei bei einer erkannten Kollisionsgefahr von hinten eine Absenkung der unabhängig vom Fahrer erhöhten Bremskraft erfolgt oder die Erhöhung begrenzt ist.

### Kern und Vorteile der Erfindung

Kern der Erfindung ist es, Fahrzeuge, insbesondere Fahrzeuge mit Abstandsregelungseinrichtungen, automatisch abbremsen zu können und dabei die Abbremsung so zu gestalten, dass die Insassen möglichst nicht gefährdet werden. Dies geschieht durch die Merkmale der unabhängigen Ansprüche. Vorteilhafte Weiterbildungen sind in den Unteransprüchen beschrieben. Die Entscheidung, ob eine Verzögerung zur Vermeidung von Kollisionen aufrechterhalten werden soll oder abgebrochen werden soll, wird auf Grundlage eines Vergleichs zweier ermittelter Gefährdungsmaße gefällt. Es ist ein erstes Gefährdungsmaß vorgesehen, das die Gefährdung des eigenen Fahrzeugs bei einer fortgeführten Verzögerung repräsentiert sowie ein zweites Gefährungsmaß, das die Gefährdung des Fahrzeugs bei einer Bremsenöffnung während der Verzögerung repräsentiert. Während einer Bremsoperation ist es möglich, dass das Fahrzeug infolge mangelnder Bodenhaftung beginnt, sich um seine Hochachse zu drehen oder aber während einer Bremsung die lenkbaren Vorderräder eingeschlagen werden. Wird die Haftungsgrenze der Reifen auf der Fahrbahn wieder erreicht, können derartige Situationen dazu führen, dass das eigene Fahrzeug unkontrollierbar wird und es zu Kollisionen mit stehenden oder fahrenden Hindernissen kommt. Um dieses zu vermeiden, wird während dem Bremsmanöver zur Vermeidung einer Kollision fortwährend überprüft, ob es im Hinblick auf die Sicherheit günstiger ist, die Bremsen zu lösen und das Fahrzeug kontrolliert um das Hindernis herumzulenken oder aber ob es günstiger ist, trotz Loslassen des Bremspedals durch den Fahrer die Notbremsung beizubehalten und ein unkontrolliertes Ausbrechen des Fahrzeugs zu verhindern.

Es ist weiterhin vorteilhaft, dass es sich bei der automatisierten Bremsung entweder um eine automatisch ausgelöste Bremsung handelt oder eine vom Fahrer ausgelöste, jedoch automatisch durchgeführte Bremsung handelt. Beiden Möglichkeiten ist jedoch gemein, dass es sich bei der Bremsung um eine starke Verzögerung zur Vermeidung einer Kollision oder zur Minderung der Kollisionsgeschwindigkeit handelt, deren Verzögerung in etwa der maximal möglichen Fahrzeugverzögerung entspricht.

Weiterhin ist es vorteilhaft, dass die Verzögerungsmittel während einer Bremsoperation deaktiviert werden, wenn der Vergleich der Gefährdungsmaße ergibt, dass das erste Gefährdungsmaß höher ist als das zweite Gefährdungsmaß. Im Falle, dass das erste Gefährdungsmaß kleiner ist als das zweite Gefährdungsmaß wird die Bremsoperation auch dann fortgeführt, wenn der Fahrer während der Bremsoperation das Bremspedal deaktiviert.

Vorteilhafterweise werden das erste und das zweite Gefährdungsmaß mittels vorrausberechneter Bewegungstrajektorien der erkannten Hindernisse und des eigenen Fahrzeugs bestimmt. Zur Vorausberechnung der Bewegungstrajektorien werden die Positionen und die Bewegungen des eigenen Fahrzeugs und der stehenden und bewegten Hindernisse im Umfeld des Fahrzeugs mittels fahrdynamischer Modelle sowie des charakteristischen, zu erwartenden Fahrerverhaltens berücksichtigt.

Weiterhin ist es vorteilhaft, dass in die Ermittlung der Eigensituation das charakteristische Fahrverhalten des Fahrers einbezogen wird. Hierbei wird berücksichtigt, wie der Fahrer Lenk-, Beschleunigungs- und Bremsbetätigungen ausführt, ob diese eher langsam und im Ausmaß möglichst schwach oder abrupt und von heftigem Ausmaß sind. Hierbei kann auch berücksichtigt werden, mit welcher Dynamik der Fahrer das Fahrzeug im Mittelwert beschleunigt, verzögert oder lenkt.

Vorteilhafterweise werden zur Erfassung der Umfeldsituation und der eigenen Fahrzeugsituation Signale von mindestens einem der folgenden Sensoren verarbeitet: Gierratensensor, Radarsensor, Lidarsensor, Videosensor, Raddrehzahlsensor, Lenkwinkelsensor, Fahrpedalsensor, Bremspedalsensor oder Massenträgheitssensor. Erfindungsgemäß ist es nicht notwendig, dass alle der aufgeführten Sensorsignale verarbeitet werden müssen, es ist jedoch auch möglich, dass weitere Signale von Sensoren, die das Fahrzeugumfeld oder die eigene Fahrzeugbewegung detektieren, zusätzlich berücksichtigt werden.

Vorteilhafterweise unterscheidet die Steuerung der Verzögerungsmittel mindestens drei Zustände, wobei die Steuerung zu einem Zeitpunkt genau einen der folgenden Zustände einnehmen kann:
- keine Verzögerung des Fahrzeugs und keine Verzögerungsvorbereitung,
- keine Verzögerung des Fahrzeugs, aber Vorbereitung der Verzögerungsmittel durch Vorbefüllung der Bremsanlagen und Anlegen der Bremsbeläge an die Bremsscheiben sowie
- maximal mögliche Verzögerung des Fahrzeugs.

Weiterhin ist es vorteilhaft, wenn die Steuerung der Verzögerungsmittel mindestens vier Zustände hat, wobei insbesondere vorgesehen ist, dass zu einem Zeitpunkt genau einer der folgenden Zustände eingenommen wird:
- keine Verzögerung des Fahrzeugs und keine Verzögerungsvorbereitung,
- keine Verzögerung des Fahrzeugs aber Vorbereitung der Verzögerungsmittel durch Vorbefüllung der Bremsanlagen und Anlegen der Bremsbeläge an die Bremsscheiben,
- Verzögerung des Fahrzeugs, die unterhalb der maximal möglichen Verzögerung des Fahrzeugs liegt, sowie
- maximal mögliche Verzögerung des Fahrzeugs.

Erfindungsgemäß wird das beschriebene Verfahren durch eine Vorrichtung ausgeführt, welche Erfassungsmittel vorsieht, mit denen die Umfeldsituation, die Situation des eigenen Fahrzeugs und die Fahreraktivitäten erfasst werden können, diese einer Auswerteeinrichtung zugeführt werden können in der mittels fahrdynamischer Modelle wahrscheinliche Bewegungstrajektorien des eigenen Fahrzeugs und der im Umfeld erkannten stehenden und bewegten Hindernisse ermittelt werden, aus diesen Bewegungstrajektorien ein erstes Gefährdungsmaß für eine fortgeführte Verzögerung des Fahrzeugs und ein zweites Gefährdungsmaß für eine ungebremste Weiterbewegung des Fahrzeugs ermittelt werden und in Abhängigkeit des Vergleichsergebnisses aus dem ersten und dem zweiten Gefährdungsmaß Mittel zur Verzögerung des Fahrzeugs aktiviert bleiben oder deaktiviert werden können.

Von besonderer Bedeutung ist die Realisierung des erfindungsgemäßen Verfahrens in der Form eines Steuerelementes, das für ein Steuergerät, insbesondere ein Steuergerät für eine Abstandsregelung, vorgesehen ist. Dabei ist auf dem Steuerelement ein Programm gespeichert, das auf einem Rechengerät, insbesondere auf einem Mikroprozessor oder ASIC, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein "read only memory" oder ein "ASIC".

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehungen sowie unabhängig von ihrer Formulierung bzw. Darstellung in der Beschreibung bzw. in der Zeichnung.

### Zeichnung

Nachfolgend werden Ausführungsbeispiele der Erfindung anhand von Figuren erläutert. Es zeigen
- Figur 1: ein Zustanddiagramm für die Steuerung der Verzögerungseinrichtungen mit drei Betriebszuständen,
- Figur 2: ein Zustandsdiagramm zur Steuerung der Fahrzeugverzögerungseinrichtungen mit vier Betriebszuständen,
- Figur 3: eine Skizze einer Fahrsituation, in der das erfindungsgemäße Verfahren verwendet wird,
- Figur 4: eine weitere Skizze einer Verkehrssituation, in der das erfindungsgemäße Verfahren verwendet wird und
- Figur 5: ein Blockschaltbild der erfindungsgemäßen Vorrichtung.

### Beschreibung von Ausführungsbeispielen

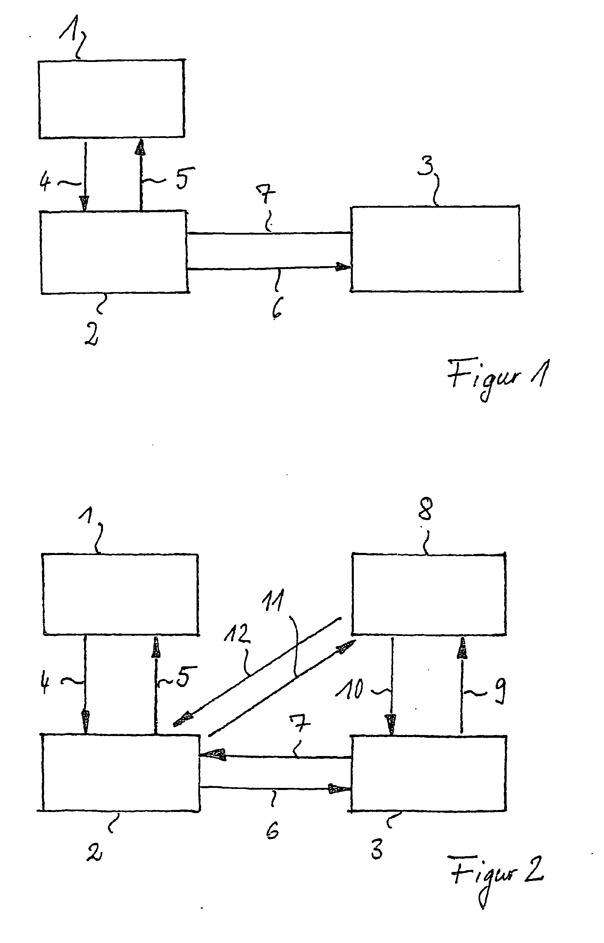

Figur 1 zeigt ein Zustandsübergangsdiagramm einer bevorzugten Ausführungsform für die Steuerung der Verzögerungsmittel. In Figur 1 stellt Block 1 den Betriebszustand dar, dass keine Verzögerung und keine Verzögerungsvorbereitung angefordert wird. Dies bedeutet, dass das Bremssystem druckfrei ist und kein Bremseneingriff stattfindet. Der Zustandsblock 2 stellt den Betriebszustand dar, in dem keine Verzögerung des Fahrzeugs angefordert wird, aber die Verzögerungsmittel für eine eventuell bevorstehende Verzögerung vorbereitet werden. Dies geschieht durch ein Vorbefüllen der Bremsanlagen und ein Anlegen der Bremsbeläge an die Bremsscheiben ohne Druck auf diese auszuüben um im Bremsfall eine schnellere Verzögerung herbeiführen zu können. Der Betriebszustand 3 in Block 3 repräsentiert eine Abbremsung des Fahrzeugs mit einer maximal möglichen Verzögerung, um eine drohende Kollision zu vermeiden oder eine nicht mehr abwendbare Kollision abzumildern. Der Übergang 4 vom Betriebszustand 1 in den Betriebszustand 2 geschieht automatisch, wenn ein Sensorsignal einen Fahrzustand feststellt, in dem mit einer drohenden Kollision gerechnet werden muss. Dies geschieht vorteilhafterweise durch Überwachung der Gierrate oder des Lenkwinkeleinschlages, des Radar- , Lidar- , oder Videosensors oder des Bremspedalsensors. Übersteigt ein derartiges Signal einen vorgegebenen Schwellenwert oder überschreitet eine Kombination dieser Signale eine vorbestimmte Kombination von Schwellenwerten, so werden die Verzögerungsmittel für eine eventuell bevorstehende Notbremsung in oben beschriebener Weise vorbereitet. Liegen diese Vorbereitungskriterien des Übergangs 4 nach einer vorbestimmten Zeit nicht mehr vor, so wird die Verzögerungsvorbereitung aufgehoben, indem das Bremssystem wieder drucklos gemacht wird. Dieser Vorgang entspricht dem Übergang 5 vom Betriebszustand 2 in den Betriebszustand 1. Der Übergang 6 vom Betriebszustand 2 zum Betriebszustand 3 repräsentiert die Auslösung einer starken Verzögerung, indem die zu einer Bremsoperation vorbereiteten Verzögerungsmittel aktiviert werden und mit einer maximal möglichen Verzögerung betrieben werden. Dies geschieht durch Auswertung der der Vorrichtung zugeführten Sensorsignale, indem aus einem oder mehreren dieser Signale erkannt wird, dass eine Kollision mit einem stehenden oder fahrenden Hindernis unausweichlich ist. Der Übergang 7 vom Betriebszustand 3 zum Betriebszustand 2 verkörpert den Abbruch einer Verzögerung mit maximal möglicher Verzögerung, wobei eine Bremsvorbereitung beibehalten wird. Die Übergänge 4, 5, 6, 7 in der Figur 1 werden erfindungsgemäß automatisch gesteuert, indem die Sensoreingangsdaten in erfindungsgemäßer Art und Weise ausgewertet werden.

Figur 2 beschreibt ein ähnliches Ausführungsbeispiel, wobei in diesem Ausführungsbeispiel ein weiterer Betriebszustand 8 zur Steuerung der Verzögerungsmittel vorgesehen ist. Dieser weitere Betriebszustand 8 repräsentiert eine Verzögerung des Fahrzeugs, die unter der maximal möglichen Fahrzeugverzögerung liegt und somit als Teilverzögerung beschrieben werden kann. Die Betriebszustände 1, 2 und 3 entsprechen den gleichen Betriebszuständen 1, 2 und 3 aus der Figur 1. Auch die Übergänge 4, 5, 6 und 7 zwischen den Betriebszuständen entsprechen den gleichen Übergängen 4 bis 7 aus Figur 1. Neu hinzugekommen sind die Übergänge 9, 10, 11 und 12. Übergang 9 zwischen dem Betriebszustand 3 und dem Betriebszustand 8 repräsentiert eine Verringerung der Fahrzeugverzögerung von einer in etwa maximal möglichen Fahrzeugverzögerung auf eine Teilverzögerung. Der Übergang 10 stellt den Übergang vom Zustand 8 auf den Zustand 3 dar und verkörpert eine Erhöhung der Verzögerung von einer Teilverzögerung auf eine maximal mögliche Fahrzeugverzögerung. Der Übergang 11 von Zustand 2 nach Zustand 8 stellt die Einleitung einer Verzögerung dar, indem das zur Bremsung vorbereitete Verzögerungssystem mit einer tatsächlichen Verzögerung des Fahrzeugs beginnt, wobei diese Fahrzeugverzögerung einer Verzögerung entspricht, die unterhalb der maximal möglichen Fahrzeugverzögerung liegt. Der Zustand 12 in umgekehrter Richtung repräsentiert die Aufhebung einer Teilverzögerung hin zu einer verzögerungsfreien Weiterbewegung, jedoch mit einer verzögerungsbereiten Bremsanlage.

Der Betriebszustand 8 des Zustandsübergangsdiagramms in Figur 2 verkörpert Verzögerungen, die unterhalb der maximal möglichen Fahrzeugverzögerung liegen. Dies bedeutet, dass in diesem Zustand 8 ein variabler Bremsdruck möglich ist, der sich über die Zeit betrachtet verändern kann.

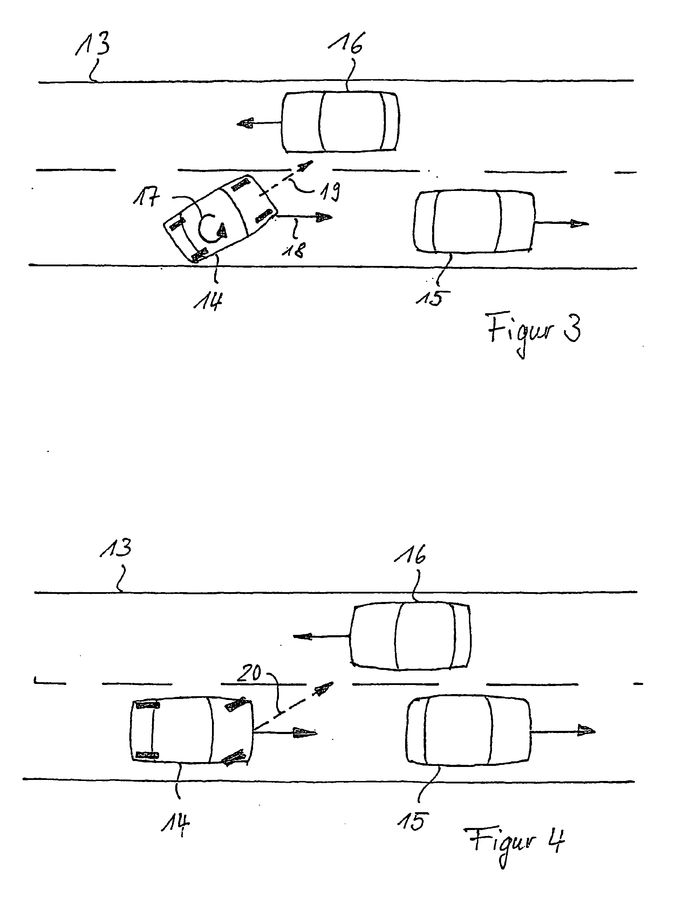

Figur 3 stellt eine mögliche Verkehrssituation dar, in der das erfindungsgemäße Verfahren Verwendung findet. Dargestellt ist eine Straße 13, wobei in jeder Richtung jeweils eine Fahrbahn vorgesehen ist. Auf dieser Fahrbahn bewegt sich das Fahrzeug 14, das mit der erfindungsgemäßen Vorrichtung ausgerüstet ist. Vor diesem Fahrzeug 14 befindet sich ein vorausfahrendes Fahrzeug 15 sowie in der Gegenrichtung ein entgegenkommendes Fahrzeug 16. Im indikationsfreien Betriebszustand hat die Steuerung der Verzögerungsmittel des Fahrzeugs 14 den Betriebszustand 1 inne. Dies bedeutet, dass das Fahrzeug 14 dem Fahrzeug 15 folgt. Erkennt die Umfeldsensorik des Fahrzeugs 14, dass das Gefahrenpotential zunimmt, was beispielsweise durch eine starke Verzögerung des Fahrzeugs 15 verursacht wird oder durch ein plötzliches Auftauchen eines Hindernisses zwischen dem Fahrzeug 14 und dem Fahrzeug 15, so geht die Steuerung der Verzögerungsmittel in den Betriebszustand 2 über. Dies hat zur Folge, dass die Verzögerungsmittel für eine eventuell bevorstehende Notbremsung vorbereitet werden, indem die Bremsanlagen des Fahrzeugs vorbefüllt werden und die Bremsbeläge an die Bremsscheiben angelegt werden. Erhöht sich das Gefährdungsmaß für das Fahrzeug 14, so sind zwei Reaktionen möglich. Entweder der Fahrer erkennt die Gefahrensituation selbst und leitet durch eine entsprechende Bremspedalbetätigung eine Bremsoperation ein, oder der Fahrer erkennt das Gefährdungsmaß dieser Fahrsituation nicht und die Steuerung der Verzögerungsmittel leitet automatisch eine Bremsoperation ein. Im weiteren Verlauf dieser beiden möglichen Bremsoperationen ermittelt die Umfeldsensorik aus den erkannten Hindernissen, in diesem Beispiel handelt es sich um die Fahrzeuge 15 und 16 oder um ein plötzlich auftauchendes Hindernis zwischen den Fahrzeugen 14 und 15, jeweils ein Gefährdungsmaß für eine fortgesetzte Verzögerung sowie für einen Abbruch der Verzögerung. Zur Ermittlung dieser Gefährdungsmaße werden die Positionen und Geschwindigkeiten der Hindernisse mittels der Umfeldsensorik ermittelt und deren weitere Bewegungstrajektorien vorausberechnet. Im Verlauf der Verzögerungsoperation kann es geschehen, dass die Bodenhaftung der Räder des Fahrzeugs 14 an Haftung verlieren und das Fahrzeug ins Schleudern gerät. Dies ist in der beispielhaften Situation, wie sie in Figur 3 dargestellt ist, durch den Pfeil 17 angedeutet, der eine Bewegung des Fahrzeugs um seine Hochachse darstellt. In dieser Situation soll das erfindungsgemäße Verfahren gewährleisten, dass wenn die Bodenhaftung der Räder wieder einsetzt, sich das Fahrzeug nicht auf die Gegenfahrbahn weiterbewegt. Hierzu ist es notwendig, die kollisionsvermeidende Bremsung nicht abzubrechen, sondern bis zum Stillstand fortzuführen, selbst wenn der Fahrer das Bremspedal loslässt und ein Ende der Verzögerung wünscht.

In Figur 4 ist eine weitere Verkehrssituation dargestellt, in der das erfindungsgemäße Verfahren Verwendung findet. Es ist eine Fahrbahn 13 dargestellt, die in jeder Fahrtrichtung über eine Fahrspur verfügt. Auf diesen Fahrspuren befindet sich das mit der erfindungsgemäßen Vorrichtung ausgerüstete Fahrzeug 14, ein vor diesem Fahrzeug herfahrendes Fahrzeug 15 sowie ein Fahrzeug 16, das auf der entgegengesetzten Fahrspur entgegenkommt. Die Bewegungsrichtungen der Fahrzeuge sind durch Pfeile in der Figur erkenntlich. Auch in dieser Figur erfasst die Umfeldsensorik des Fahrzeugs 14 die Verkehrssituation im Erfassungsbereich des Fahrzeugs und wertet diese bezüglich der Gefahrenmaße aus. Erhöht sich das Gefährdungsmaß, beispielsweise infolge einer starken Bremsung des vorherfahrenden Fahrzeugs 15 oder eines plötzlichen auftauchenden Hindernisses zwischen den Fahrzeugen 14 und 15, so geht die Steuerung der Verzögerungsmittel vom Zustand 1 in Zustand 2 über, indem die Bremsmittel zu einer Verzögerung vorbereitet werden. Steigt im weiteren Verlauf das Gefahrenpotential dieser Situation an oder leitet der Fahrer des Fahrzeugs 14 durch eine Bremspedalbetätigung eine Verzögerung ein mit der eine Kollision verhindert werden soll, so geht die Steuerung der Verzögerungsmittel laut Figur 1 vom Zustand 2 in Zustand 3 über oder laut Figur 2 vom Zustand 2 in Zustand 8 oder 3. Infolge dieser starken Verzögerung kann es passieren, dass die Räder des Fahrzeugs 14 die Bodenhaftung verlieren. Weiterhin ist es denkbar, dass der Fahrer des Fahrzeugs 14 durch einen Lenkeingriff ein Ausweichmanöver durchführen möchte und somit die lenkbaren Vorderräder eingeschlagen werden. Würden in diesem Falle die verzögerten Räder wieder an Bodenhaftung gewinnen, so würde das Fahrzeug infolge des Lenkeinschlages abrupt die Bewegungsrichtung in Richtung des strichlierten Pfeiles 20 fortsetzen. Im Falle eines entgegenkommenden Fahrzeugs 16 würde dies in einer Kollision mit diesem Fahrzeug enden. Um dieses zu vermeiden beobachtet die Umfeldsensorik des Fahrzeugs 14 das aktuelle Fahrgeschehen und bewertet die Situation für eine fortgeführte Verzögerung mit einem ersten Gefährdungsmaß sowie für eine abgebrochene Bremssituation mit einem zweiten Gefährdungsmaß. In diesem Falle wäre das zweite Gefährdungsmaß größer als das erste, da bei einem Abbruch der Verzögerungsoperation eine Kollision unausweichlich wäre. In diesem Falle würde die Steuerung der Verzögerungsmittel die Bremsoperation fortsetzen, auch wenn der Fahrer durch ein Loslassen des Bremspedals einen Wunsch zum Verzögerungsabbruch gäbe. Es sind jedoch auch Verkehrssituationen mit einer Bremsung zur Verhinderung einer Kollision denkbar, in denen der Fahrer die Bremspedalbetätigung aufrechterhält, wodurch ein zweites Gefährdungsmaß entstände, das größer wäre als erste Gefährdungsmaß einer fortgeführten Notbremsung. In diesem Fall würde die Steuerung der Verzögerungsmittel den Bremsvorgang abbrechen, auch wenn der Fahrer das Bremspedal weiterhin betätigt. Der Fahrer erhält somit intuitiv die Möglichkeit, ein Ausweichmanöver durchzuführen, dessen Gefährdungsmaß unterhalb dem einer fortgeführten Bremsoperation läge. Die Steuerung der Verzögerungsmittel hat folglich die Möglichkeit, selbständig zu entscheiden, ob im Falle einer bevorstehenden Kollision es günstiger ist, die Verzögerung fortzuführen, um eine mögliche Kollisionsgeschwindigkeit weiter zu reduzieren oder ob es vorteilhafter wäre, die Verzögerung abzubrechen und dem Fahrer die Möglichkeit eines Ausweichmanövers zu eröffnen. Insbesondere in Fahrzeugen, die nicht mit elektronischen Fahrdynamikregelungen ausgestattet sind, bietet dieses Verfahren eine Erhöhung der Fahrsicherheit.

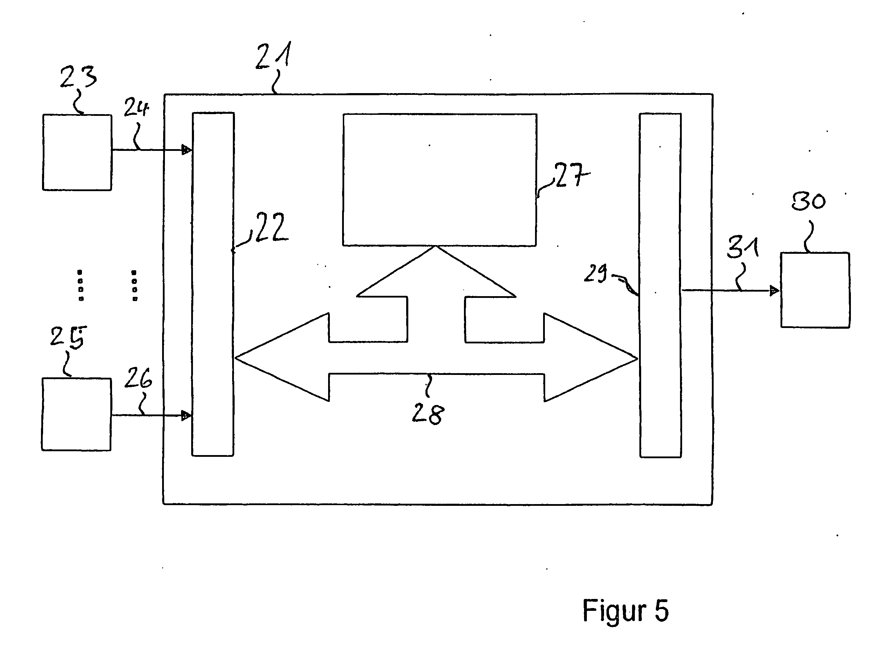

In Figur 5 ist der schematische Aufbau der erfindungsgemäßen Vorrichtung zur Durchführung des erfindungsgemäßen Verfahrens skizziert. In einem Steuergerät 21 zur Steuerung der Verzögerungsmittel ist unter anderem ein Eingangsfeld 22 vorgesehen. Dieses Eingangsfeld 22 empfängt Signale 24 bis 26 von verschiedenen Sensoren 23 bis 25. Bei den Sensoren 23 bis 25 kann es sich um einen oder mehrere der folgenden Vorrichtungen handeln: Gierratensensor, Radarsensor, Lidarsensor, Videosensor, Raddrehzahlsensor, Lenkwinkelsensor, Fahrpedalsensor, Bremspedalsensor oder Massenträgheitssensor. Die von diesen Sensoren zur Verfügung gestellten Signale 24 bis 26 werden an das Eingangsfeld 22 weitergegeben, von wo aus sie mittels eines Datenaustauschsystems 28 einer Auswerteeinrichtung 27 zugeführt wird. Diese Auswerteeinrichtung 27 kann ein Mikroprozessor oder ein ASIC sein. In dieser Auswerteeinrichtung 27 werden auf Grundlage fahrdynamischer Modelle die Bewegungstrajektorien der von mindestens einem der Sensoren 23 bis 25 erkannten stehenden oder bewegten Hindernisse vorausberechnet. Mittels dieser vorausberechneten Bewegungstrajektorien kann ein erstes Gefährdungsmaß für eine fortgeführte Verzögerung sowie ein zweites Gefährdungsmaß für eine abgebrochene Verzögerung ermittelt werden. Durch den Vergleich dieser beiden Gefährdungsmaße entscheidet die Auswerteeinrichtung 27, ob die Verzögerung fortgesetzt oder abgebrochen werden soll. Je nach Entscheidungsresultat wird über die Datenaustauschvorrichtung 28 dem Ausgangsfeld 29 ein Signal 31 zugeführt, das die Verzögerungsmittel 30 steuert.

## Patentansprüche

1. Verfahren zur automatischen Steuerung der Verzögerungseinrichtungen (30) eines Fahrzeugs (14) während einer automatisierten Bremsung, wobei vor und während einer automatisierten Bremsung des Fahrzeugs mittels Erfassungseinrichtungen (23,25) die Umfeldsituation und die Eigensituation erfaßt wird, wobei auf Grundlage der erfaßten Situationen ein erstes Gefährdungsmaß für eine fortgeführte Verzögerung des Fahrzeugs und ein zweites Gefährdungsmaß für eine ungebremste Weiterbewegung des Fahrzeugs ermittelt werden und dass aus einem Vergleich des ersten mit dem zweiten Gefährdungsmaß entschieden wird, ob die Verzögerungseinrichtungen (30) aktiviert bleiben oder deaktiviert werden, **dadurch gekennzeichnet, dass** die Steuerung der Verzögerungsmittel mindestens 4 Zustände hat, wobei vorgesehen ist, dass die Steuerung der Verzögerungsmittel folgenden Zustände einnehmen kann
- keine Verzögerung des Fahrzeugs und keine Verzögerungsvorbereitung,
- keine Verzögerung des Fahrzeugs aber Vorbereitung der Verzögerungsmittel durch Vorbefüllung der Bremsanlagen und Anlegen der Bremsbeläge an die Bremsscheiben,
- Verzögerung des Fahrzeugs, die unterhalb der maximal möglichen Verzögerung des Fahrzeugs liegt sowie
- maximal mögliche Verzögerung des Fahrzeugs.

2. Verfahren nach Anspruch 1, **dadurch gekennzeichnet, dass** es sich bei der automatisierten Bremsung um eine automatisch gesteuerte Verzögerung zur Vermeidung einer Kollision oder zur Minderung der Kollisionsgeschwindigkeit handelt.

3. Verfahren nach einem der Ansprüche 1 oder 2, **dadurch gekennzeichnet, dass** die Verzögerungsmittel (30) während einer Bremsoperation deaktiviert werden, wenn der Vergleich der Gefährdungsmaße ergibt, dass das erste Gefährdungsmaß höher ist, als das zweite Gefährdungsmaß.

4. Verfahren nach einem der vorhergehenden Ansprüche, **dadurch gekennzeichnet, dass** das erste und das zweite Gefährdungsmaß mittels vorausberechneter Bewegungstrajektorien der erkannten Hindernisse bestimmt wird.

5. Verfahren nach einem der vorhergehenden Ansprüche, **dadurch gekennzeichnet, dass** zur Vorausberechnung der Bewegungstrajektorien die Positionen und die Bewegungen des eigenen Fahrzeugs (14) und der stehenden oder bewegten Hindernisse (15,16) im Umfeld des Fahrzeugs mittels fahrdynamischer Modelle berücksichtigt werden.

6. Verfahren nach einem der vorhergehenden Ansprüche, **dadurch gekennzeichnet, dass** in die Ermittlung der Eigensituation das charakteristische Fahrverhalten des Fahrers einbezogen wird.

7. Verfahren nach einem der vorhergehenden Ansprüche, **dadurch gekennzeichnet, dass** zur Erfassung der Umfeldsituation und der Eigensituation Signale von mindestens einem der Sensoren Gierratensensor, Radarsensor, Lidarsensor, Videosensor, Raddrehzahlsensor, Lenkwinkelsensor, Fahrpedalsensor, Bremspedalsensor oder Massenträgheitssensor verarbeitet werden.

8. Vorrichtung zur automatischen Steuerung der Verzögerungseinrichtungen eines Fahrzeugs, wobei Erfassungsmittel (23,25) vorgesehen sind, mit denen die Umfeldsituation, die Fahrzeugsituation und die Fahreraktivitäten erfasst werden, wobei diese einer Auswerteeinrichtung (27) zugeführt werden, in der mittels fahrdynamischer Modelle wahrscheinliche Bewegungstrajektorien ermittelt werden, aus diesen Bewegungstrajektorien ein erstes Gefährdungsmaß für eine fortgeführte Verzögerung des Fahrzeugs und ein zweites Gefährdungsmaß für eine ungebremste Weiterbewegung des Fahrzeugs ermittelt werden und Mittel (30) zur Verzögerung des Fahrzeugs vorhanden sind, die in Abhängigkeit des Vergleichsergebnisses aus dem ersten und dem zweiten Gefährdungsmaß aktiviert bleiben oder deaktiviert werden, **dadurch gekennzeichnet, dass** die Vorrichtung mit mindestens 4 Zuständen gesteuert wird, wobei vorgesehen ist, dass die Vorrichtung folgende Zustände einnehmen kann
- keine Verzögerung des Fahrzeugs und keine Verzögerungsvorbereitung,
- keine Verzögerung des Fahrzeugs aber Vorbereitung der Verzögerungsmittel durch Vorbefüllung der Bremsanlagen und Anlegen der Bremsbeläge an die Bremsscheiben,
- Verzögerung des Fahrzeugs, die unterhalb der maximal möglichen Verzögerung des Fahrzeugs liegt sowie
- maximal mögliche Verzögerung des Fahrzeugs.

9. Vorrichtung nach Anspruch 8, **dadurch gekennzeichnet, dass** es sich bei der Verzögerung um eine Bremsoperation zur Vermeidung einer Kollision oder zur Minderung der Kollisionsgeschwindigkeit handelt.

## Claims

1. Method for automatically controlling the deceleration apparatuses (30) of a vehicle (14) during automatic braking, wherein the situation in the surroundings and the vehicle's own situation are sensed by means of sensing apparatuses (23, 25) before and during automatic braking of the vehicle, wherein a first measure of hazard for continued deceleration of the vehicle and a second measure of hazard for unbraked further movement of the vehicle are determined on the basis of the sensed situations, and wherein on the basis of a comparison between the first and second measures of hazard it is decided whether the deceleration apparatuses (30) remain activated or are deactivated, **characterized in that** the control of the deceleration means has at least 4 states, wherein there is provision that the control of the deceleration means can assume the following states
- no deceleration of the vehicle and no preparation of deceleration,
- no deceleration of the vehicle but preparation of the deceleration means by pre-charging the brake systems and applying the brake linings to the brake discs,
- deceleration of the vehicle below the maximum possible deceleration of the vehicle and
- maximum possible deceleration of the vehicle.

2. Method according to Claim 1, **characterized in that** the automated braking comprises automatically controlled deceleration in order to avoid a collision or in order to reduce the collision speed.

3. Method according to either of Claims 1 and 2, **characterized in that** the deceleration means (30) are deactivated during a braking operation if the comparison of the measures of hazard reveals that the first measure of hazard is higher than the second measure of hazard.

4. Method according to one of the preceding claims, **characterized in that** the first and second measures of hazard are determined by means of precalculated movement trajectories of the detected obstacles.

5. Method according to one of the preceding claims, **characterized in that**, in order to calculate the movement trajectories in advance, the positions and the movements of the driver's own vehicle (14) and of the stationary or moving obstacles (15, 16) in the surroundings of the vehicle are taken into account by means of vehicle movement dynamics models.

6. Method according to one of the preceding claims, **characterized in that** the characteristic driving behaviour of the driver is included in the determination of the vehicle's own situation.

7. Method according to one of the preceding claims, **characterized in that**, in order to sense the situation in the surroundings and the vehicle's own situation, signals from at least one of the sensors of the yaw rate sensor, radar sensor, lidar sensor, video sensor, wheel speed sensor, steering angle sensor, accelerator pedal sensor, brake pedal sensor or mass inertia sensor are processed.

8. Device for automatically controlling the deceleration apparatuses of a vehicle, wherein sensing means (23, 25) are provided with which the situation in the surroundings, the vehicle's situation and the driver's activities are sensed, wherein the latter are fed to an evaluation device (27) in which probable movement trajectories are determined by means of vehicle movement dynamics models, a first measure of hazard for continued deceleration of the vehicle and a second measure of hazard for unbraked further movement of the vehicle are determined from these movement trajectories, and means (30) for decelerating the vehicle which stay activated or are deactivated as a function of the comparison result from the first and second measures of hazard are present, **characterized in that** the device is controlled with at least 4 states, wherein there is provision that the device can assume the following states
- no deceleration of the vehicle and no preparation of deceleration,
- no deceleration of the vehicle but preparation of the deceleration means by pre-charging the brake systems and applying the brake linings to the brake discs,
- deceleration of the vehicle below the maximum possible deceleration of the vehicle and
- maximum possible deceleration of the vehicle.

9. Device according to Claim 8, **characterized in that** the deceleration is a braking operation for avoiding a collision or for reducing the collision speed.

## Revendications

1. Procédé de commande automatique des dispositifs de ralentissement (30) d'un véhicule (14) pendant un freinage automatisé, la situation de l'environnement et la situation propre étant détectées avant et pendant un freinage automatisé du véhicule au moyen de dispositifs de détection (23, 25), un premier indice de danger pour une poursuite du ralentissement du véhicule et un deuxième indice de danger pour une poursuite du mouvement non freiné du véhicule étant déterminés en se basant sur les situations détectées et une décision étant prise à partir d'une comparaison entre le premier et le deuxième indices de danger en vue de maintenir les dispositifs de ralentissement (30) activés ou en vue de les désactiver, **caractérisé en ce que** la commande des moyens de ralentissement possède au moins 4 états, la commande des moyens de ralentissement pouvant adopter les états suivants :
- pas de ralentissement du véhicule et pas de préparation au ralentissement,
- pas de ralentissement du véhicule mais préparation des moyens de ralentissement par remplissage anticipé des équipements de freinage et application des garnitures de frein sur les disques de frein,
- ralentissement du véhicule inférieur au ralentissement maximum possible du véhicule et
- ralentissement maximum possible du véhicule.

2. Procédé selon la revendication 1, **caractérisé en ce que** le freinage automatisé est un ralentissement à commande automatique destiné à éviter une collision ou à diminuer la vitesse de collision.

3. Procédé selon l'une des revendications 1 ou 2, **caractérisé en ce que** les moyens de ralentissement (30) sont désactivés pendant une opération de freinage lorsque la comparaison des indices de danger a pour résultat que le premier indice de danger est plus élevé que le deuxième indice de danger.

4. Procédé selon l'une des revendications précédentes, **caractérisé en ce que** le premier et le deuxième indices de danger sont déterminés au moyen de trajectoires de déplacement calculées de manière anticipée des obstacles détectés.

5. Procédé selon l'une des revendications précédentes, **caractérisé en ce que** les positions et les mouvements du véhicule propre (14) ainsi que les obstacles fixes ou mobiles (15, 16) dans l'environnement du véhicule sont pris en compte au moyen de modèles dynamiques de déplacement pour le calcul anticipé des trajectoires de déplacement.

6. Procédé selon l'une des revendications précédentes, **caractérisé en ce que** le comportement de conduite caractéristique du conducteur est inclus dans la détermination de la situation propre.

7. Procédé selon l'une des revendications précédentes, **caractérisé en ce que** les signaux d'au moins l'un des capteurs suivants : capteur de taux de lacet, capteur radar, capteur lidar, capteur vidéo, capteur de vitesse de rotation de roue, capteur d'angle de direction, capteur de pédale d'accélération, capteur de pédale de frein ou capteur de moment d'inertie des masses est traité pour la détection de la situation d'environnement et de la situation propre.

8. Dispositif de commande automatique des dispositifs de ralentissement d'un véhicule, des dispositifs de détection (23, 25) étant prévus pour détecter la situation de l'environnement, la situation du véhicule et les activités du conducteur, ceux-ci étant acheminés à un dispositif d'interprétation (27) dans lequel sont déterminées des trajectoires de déplacement probables au moyen de modèles dynamiques de déplacement, un premier indice de danger pour une poursuite du ralentissement du véhicule et un deuxième indice de danger pour une poursuite du mouvement non freiné du véhicule étant déterminés à partir de ces trajectoires de déplacement et des moyens (30) de ralentissement du véhicule étant présents, lesquels restent activés ou sont désactivés en fonction du résultat de la comparaison entre le premier et le deuxième indices de danger, **caractérisé en ce que** le dispositif est commandé avec au moins 4 états et il est prévu que le dispositif peut adopter les états suivants :
- pas de ralentissement du véhicule et pas de préparation au ralentissement,
- pas de ralentissement du véhicule mais préparation des moyens de ralentissement par remplissage anticipé des équipements de freinage et application des garnitures de frein sur les disques de frein,
- ralentissement du véhicule inférieur au ralentissement maximum possible du véhicule et
- ralentissement maximum possible du véhicule.

9. Dispositif selon la revendication 8, **caractérisé en ce que** le ralentissement est une opération de freinage destinée à éviter une collision ou à diminuer la vitesse de collision.
